# FASCICULE DE BREVET EUROPEEN

(11) **EP 1 145 925 B1**
(45) Date de publication et mention de la délivrance du brevet: **21.01.2004**
(21) Numéro de dépôt: 01400858.5
(22) Date de dépôt: 04.04.2001
(51) Int. Cl.: B60R 25/02

(54) **Antivol de véhicule automobile comportant des moyens perfectionnés de retenue du pêne**
Kraftfahrzeugdiebstahlsicherung mit verbesserten Verriegelungsbolzenhalterungsmitteln
Vehicle antitheft device with improved locking bolt retention means

(30) Priorité: 10.04.2000 FR 0004550
(43) Date de publication de la demande: 17.10.2001
(73) Titulaire: VALEO SECURITE HABITACLE S.A.S., 94042 Créteil Cédex (FR)
(72) Inventeur: Canard, Louis, 58000 Nevers (FR)
(74) Mandataire: Hervouet, Sylvie

(56) Documents cités:
- DE-A- 3 306 863
- GB-A- 2 298 229

## Description

La présente invention concerne un antivol de direction de véhicule automobile.

L'invention concerne plus particulièrement un antivol de direction de véhicule automobile selon le préambule de la revendication 1, voir GB-A-2 298 229.

On connaît différentes conceptions dans lesquelles l'antivol comporte un boîtier dans lequel un organe, notamment une clef, de commande manuelle du démarrage du moteur du véhicule et du verrouillage de la colonne de direction du véhicule est introduit et est utilisé pour, d'une part obtenir un déverrouillage, ou libération, en rotation d'un arbre de la colonne de direction du véhicule et, d'autre part, commander le démarrage du moteur, et inversement l'arrêt du moteur et le verrouillage ou blocage à nouveau de l'arbre de la colonne de direction.

Plus particulièrement, l'organe de commande manuelle est monté mobile axialement entre une position, arrière tirée, de verrouillage de la colonne de direction et une position, avant poussée, de déverrouillage de la colonne de direction.

Il est monté à rotation entre au moins une position angulaire de repos et une position angulaire d'utilisation, par exemple de démarrage ou de fonctionnement du moteur, dans laquelle il ne peut être tiré axialement vers l'arrière afin d'éviter un blocage accidentel de la colonne de direction lors de l'utilisation, et notamment lors du roulage du véhicule.

L'organe de commande manuelle est lié en rotation à un organe de sortie rotatif formant came qui est susceptible de coopérer avec un pêne pour commander les déplacements de ce dernier qui est monté coulissant dans le boîtier, selon une direction globalement radiale par rapport à l'axe de rotation de l'organe de commande manuelle, entre une position sortie d'antivol vers laquelle il est sollicité élastiquement et dans laquelle il fait saillie radialement vers l'extérieur à travers une ouverture du boîtier pour bloquer en rotation un organe de la colonne de direction lorsque l'organe de commande est en position angulaire de repos et en position arrière tirée de verrouillage, et une position rentrée escamotée à l'intérieur du boîtier.

Enfin, l'organe de commande manuelle est lié en rotation à un ensemble commutateur/interrupteur à plusieurs positions, pour l'alimentation de différents circuits électriques correspondants qui sont le plus souvent au nombre de quatre, parmi lesquelles on distingue successivement une position "STOP" (correspondant à la position angulaire extrême de repos de l'organe de commande manuelle), une position "+ACCESSOIRES", une position "+CONTACT" et une position "DEMARRAGE" (correspondant à l'autre position angulaire extrême opposée).

Selon une conception dite "mécanique" d'un tel système d'antivol, l'organe de commande manuelle est une clef dont la tige est reçue axialement dans le barillet d'un verrou qui permet, lorsque la clef est une clef conforme, d'entraîner en rotation un rotor de sortie pour la commande du pêne d'antivol et de l'interrupteur rotatif à plusieurs positions.

Les évolutions successives d'un tel type d'antivol ont abouti à des conceptions particulièrement fiables et compactes, l'ensemble du mécanisme d'antivol avec son verrou pouvant notamment être reçu en un seul bloc dans un tube adjacent à la colonne de direction.

Toutefois, il est aussi apparu souhaitable d'équiper certains véhicules de systèmes d'antivol plus fiables, dits "inviolables", tout en améliorant le confort d'utilisation et notamment l'ergonomie de manipulation et en respectant la normalisation qui impose le recours à un organe de commande manuel mobile axialement et en rotation pour assurer les cycles de manoeuvre mentionnés précédemment.

Dans un tel type d'antivol "électronique", le codage de l'antivol n'est plus obtenu par l'appariement d'une clef conforme et d'un verrou à barillet, mais il est obtenu par un dispositif électronique d'identification qui comporte notamment un identifiant électronique appartenant à l'utilisateur autorisé et une unité d'identification d'un utilisateur autorisé du véhicule, embarquée à bord du véhicule, qui fournit un signal codé d'antivol lorsque l'identifiant conforme est reconnu.

Le dispositif électronique est du type dit "mains libres" lorsque l'ensemble des étapes d'interrogation et de reconnaissance ou d'identification est effectué sans que l'utilisateur n'ait à effectuer aucune manoeuvre ou action particulière autre que celles lui permettant de pénétrer dans le véhicule.

Il peut aussi être du type dans lequel l'utilisateur dispose d'un identifiant en forme de badge qu'il introduit manuellement dans un boîtier à bord du véhicule.

On a ainsi proposé des conceptions dans lesquelles l'organe de commande manuelle du mécanisme d'antivol est un bouton de commande remplaçant la clef et qui est à demeure sur le véhicule.

Selon la législation, le blocage ou la libération de l'arbre de la colonne de direction doivent être provoqués par déplacement axial du bouton de manoeuvre.

D'une manière générale, l'ergonomie doit être homologue, pour l'utilisateur, de celle d'un antivol "mécanique" auquel il a pu être habitué et dans lequel l'introduction de la clef dans le verrou puis le début de la rotation correspondent à une étape d'identification.

Que l'antivol soit du type "mécanique", ou du type "électronique, il doit comporter des moyens de retenue du pêne en position rentrée ou escamotée qui soit parfaitement fiables de manière à supprimer tout risque de blocage accidentel de l'arbre de la colonne de direction encours d'utilisation du véhicule, et notamment lors du roulage.

On connaît ainsi différentes conceptions selon lesquelles le pêne est retenu radialement en position rentrée escamotée, par un organe de retenue de pêne qui est monté mobile entre une position effacée ou rétractée, et une position active de retenue du pêne vers laquelle il est sollicité élastiquement et dans laquelle un doigt de retenue appartenant à l'organe de retenue est reçu dans une encoche complémentaire du pêne.

Le souhait général des constructeurs de véhicules automobiles de standardiser les composants et les équipements au sein d'une gamme de véhicules, et pour les différentes versions d'un même modèle, aboutit notamment à standardiser la conception générale de la colonne de direction et de son mécanisme d'antivol, et plus particulièrement la conception de l'ensemble électromécanique came-pêne-interrupteur qui répond de plus à un ensemble de normes légales qui compliquent par ailleurs sa conception et son homologation.

L'invention vise ainsi à proposer une nouvelle conception des moyens de retenue du pêne qui puisse être utilisée tant pour un antivol mécanique que pour un antivol électronique, qui soit fiable et dont l'encombrement soit particulièrement réduit.

Afin de remédier à ces inconvénients, l'invention propose un antivol du type mentionné précédemment, caractérisé en ce que le déplacement de l'organe de retenue du pêne vers sa position axiale arrière effacée, à l'encontre de son ressort de rappel, sont commandés par le déplacement axial vers l'arrière de l'organe de commande manuelle jusqu'à sa position arrière tirée de verrouillage et en ce que l'antivol comporte des moyens déformables élastiquement pour indexer axialement l'organe de commande manuelle dans sa position arrière tirée de verrouillage et pour le retenir dans cette position à l'encontre de l'effort de rappel exercé sur l'organe de retenue du pêne par son ressort de rappel.

La conception selon l'invention permet notamment son adaptation à un antivol électronique dans lequel l'organe de commande manuelle se présente globalement sous la forme d'un bouton de commande manuelle qui est lié en translation axiale et en rotation à une tige de commande dont les déplacements par rapport au boîtier de l'antivol sont analogues aux déplacements de la tige d'une clef mécanique par rapport au stator du verrou à barillet qui la reçoit.

Selon d'autres caractéristiques de l'invention :
- une portion du pêne située à l'intérieur du boîtier comporte une face transversale arrière dans laquelle est formée l'encoche de retenue du pêne qui est ouverte axialement vers l'arrière et dans laquelle le doigt de retenue du pêne est susceptible d'être reçu ;
- en position verrouillée de la colonne direction, l'extrémité libre avant de l'organe de retenue du pêne s'étend en regard de la face transversale arrière ;
- l'organe de commande manuelle comporte une collerette radiale dont la face annulaire arrière coopère avec une patte de commande de l'organe de retenue du pêne qui s'étend radialement vers l'intérieur en regard de cette face annulaire.
- l'organe de commande manuelle comporte une patte, de retenue axiale de l'organe de commande manuelle par rapport au boîtier formant stator, qui s'étend radialement vers l'extérieur depuis le bord périphérique de la collerette et qui est reçue en coulissement axial dans une rainure complémentaire du boîtier pour permettre les déplacements axiaux de l'organe de commande manuelle entre ses deux positions axiales arrière tirée de verrouillage et avant poussée de déverrouillage ;
- l'antivol comporte :
   . un organe motorisé, notamment électromagnétique, de blocage en rotation de l'organe de commande par rapport au boîtier dont la libération est commandée lorsqu'un signal codé d'antivol est fourni par une unité d'identification à un circuit électronique de commande de l'organe de blocage ;
   . et un commutateur, de déclenchement d'une étape d'interrogation et d'identification, qui est porté par le boîtier et qui est déclenché par l'organe de commande manuelle;
- l'organe de commande manuelle comporte un rotor avant qui est monté tournant par rapport au boîtier formant stator entre deux positions angulaires extrêmes dont l'une correspond à la position angulaire de repos, qui commande les déplacements du pêne, et qui est immobilisé axialement par rapport au boîtier formant stator, et une tige arrière de commande qui est montée coulissante axialement par rapport au rotor, auquel elle est liée en rotation, entre une position arrière tirée de verrouillage et une position extrême avant de déverrouillage ;
- la collerette radiale de commande de l'organe de retenue du pêne appartient à la tige arrière de commande ;
- les moyens déformables élastiquement pour indexer axialement l'organe de commande manuelle dans sa position arrière tirée de verrouillage et pour le retenir dans cette position coopèrent avec un tronçon de la tige arrière de commande ;
- l'organe électromagnétique le blocage en rotation de l'organe de commande coopère avec le rotor avant pour le bloquer en rotation ;
- l'organe électromagnétique de blocage est un électroaimant d'orientation axiale dont le noyau est sollicité élastiquement en position sortie par un ressort de rappel de manière à être reçu dans au moins une encoche de blocage formée dans le rotor lorsque ce dernier est dans sa position angulaire de repos, et il est susceptible d'être rappelé électromagnétiquement en position rentrée de manière à libérer l'organe de commande manuelle en rotation ;
- l'encoche de blocage est formée dans une face annulaire arrière du rotor de l'organe de commande manuelle ;
- l'organe électromagnétique de blocage et le commutateur de déclenchement appartiennent à un sous-ensemble constituant un sous-ensemble rapporté dans le boîtier ;
- le sous-ensemble rapporté comporte une plaque à circuits imprimés qui porte le commutateur et l'organe électromagnétique de blocage ;
- la plaque à circuits imprimés est en forme d'anneau plat d'orientation transversale ;
- la plaque à circuits imprimés est d'orientation axiale ;
- l'extrémité axiale arrière de la tige de commande est liée en translation axiale et en rotation avec un bouton de manoeuvre.

D'autres caractéristiques et avantages de l'invention apparaîtront à la lecture de la description détaillée qui va suivre pour la compréhension de laquelle on se reportera aux dessins annexés dans lesquels :
- la figure 1 est une vue générale, de trois-quarts arrière et en perspective éclatée, des principaux composants d'un antivol selon un premier mode de réalisation conforme aux enseignements de l'invention ;
- la figure 2 est une vue similaire à celle de la figure 1 sur laquelle les composants sont représentés à plus grande échelle et sur laquelle on a omis de représenter certains composants, et notamment les éléments de boîtier de l'antivol ;
- la figure 3 est une vue similaire à celle de la figure 2 sur laquelle les différents composants sont illustrés dans la position relative qu'ils occupent les uns par rapport aux autres lorsque l'antivol est assemblé et lorsque le pêne est en position rentrée escamotée ;
- la figure 4 est une vue en section partielle, par un plan axial, de l'antivol représenté à la figure 3 et sur laquelle la tige de commande de l'organe de commande manuelle est en position arrière tirée avec le pêne en position sortie d'antivol ;
- la figure 5 est une vue en section selon la ligne 5-5 de la figure 4 ;
- la figure 6 est une vue similaire à celle de la figure 4 sur laquelle le pêne est représenté en position rentrée escamotée à l'intérieur du boîtier avec la tige de commande de l'organe de commande manuelle en position avant poussée ;
- la figure 7 est une vue en perspective, à plus grande échelle et en section partielle par un plan axial, qui illustre les principaux composants de l'antivol représenté aux figures 1 à 6 dans un état dans lequel le pêne est en position sortie de verrouillage de la colonne de direction et la tige de commande de l'organe de commande manuelle est en position arrière tirée ;
- la figure 8 est une vue en section transversale partielle selon la ligne 8-8 de la figure 7 ;
- les figures 9 et 10 sont des vues similaires à celles des figures 7 et 8 sur lesquelles la tige de commande de l'organe de commande manuelle est représentée en position avant poussée et en position angulaire de repos avec le pêne en position sortie de verrouillage de la colonne de direction ;
- les figures 11 et 12 sont des vues similaires à celles des figures 9 et 10 sur lesquelles la tige de commande de l'organe de commande manuelle est représentée en position avant poussée et en position angulaire de marche, avec le pêne en position rentrée escamotée à l'intérieur du boîtier et retenu dans cette position par l'organe de retenue du pêne qui est en position axiale avant active ;
- les figures 13 et 14 sont des vues similaires à celles des figures 11 et 12 sur lesquelles la tige de commande de l'organe de commande manuelle est en position avant poussée et en position angulaire de repos, avec le pêne en position rentrée et escamotée à l'intérieur du boîtier ;
- la figure 15 est une vue de détail à plus grande échelle, en section par un plan axial selon la ligne 15-15 de la figure 16, qui illustre les moyens de retenue de la "clef" de secours qui est représentée en position introduite axialement dans le corps de la tige de commande, cette dernière étant en position angulaire de repos ;
- la figure 16 est une vue en section en section selon la ligne 16-16 de la figure 15 ;
- les figures 17 et 18 sont des vues similaires à celles des figures 15 et 16 sur lesquelles la clef est illustrée en position introduite et retenue axialement dans le corps de la tige de commande, cette dernière étant représentée dans la position angulaire "ACCESSOIRES" ;
- la figure 19 est une vue similaire à celle de la figure 1 qui illustre un deuxième mode de réalisation d'un antivol conforme aux enseignements de l'invention ;
- la figure 20 est une vue similaire à celle de la figure 6 qui illustre la position relative des principaux composants du deuxième mode de réalisation de l'antivol représenté à la figure 19 ; et
- la figure 21 est une vue en perspective à plus grande échelle qui représente une partie du rotor appartenant à l'organe de commande manuelle de l'antivol selon le deuxième mode de réalisation représentée aux figures 19 et 20.

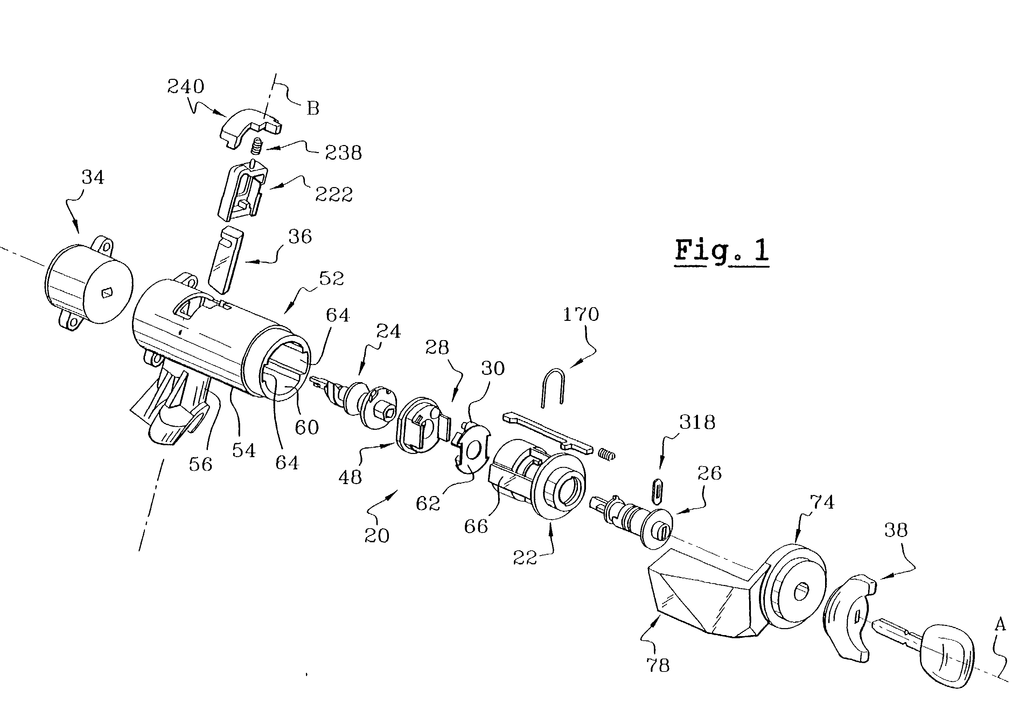

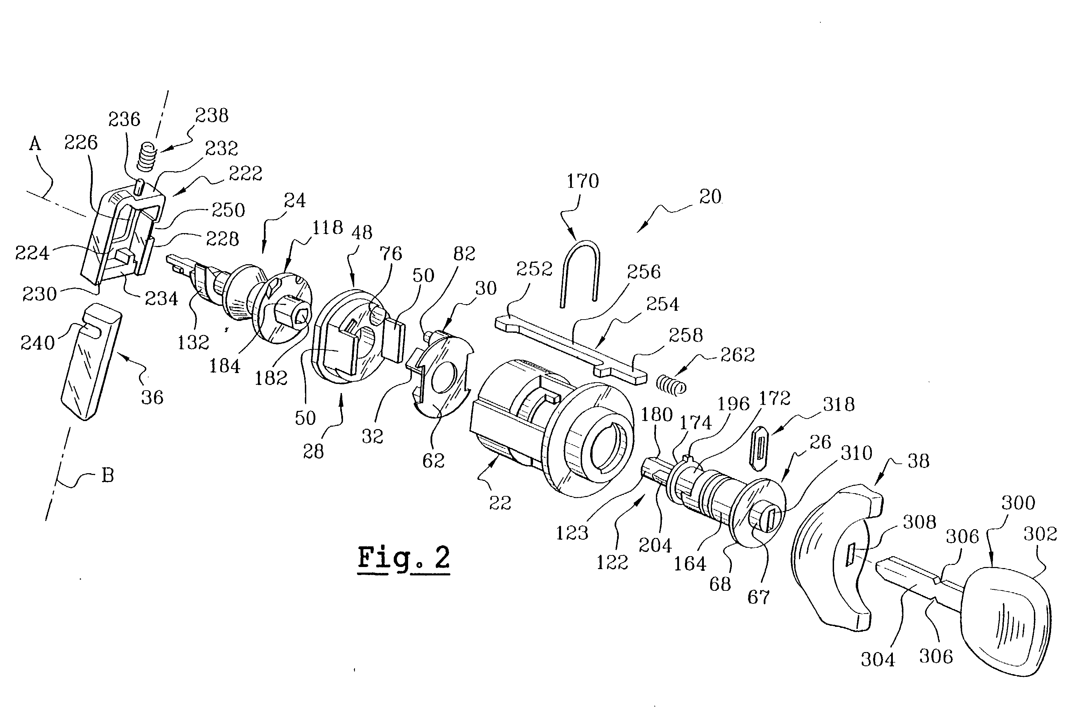

Par convention, et à titre non limitatif, on adoptera dans la suite de la description et dans les revendications une orientation d'arrière en avant selon l'axe général A de l'antivol, et ceci de la droite vers la gauche en considérant les figures 1 et 2.

Dans la description qui va suivre, des composants et éléments identiques, similaires ou analogues seront désignés par les mêmes chiffres de référence.

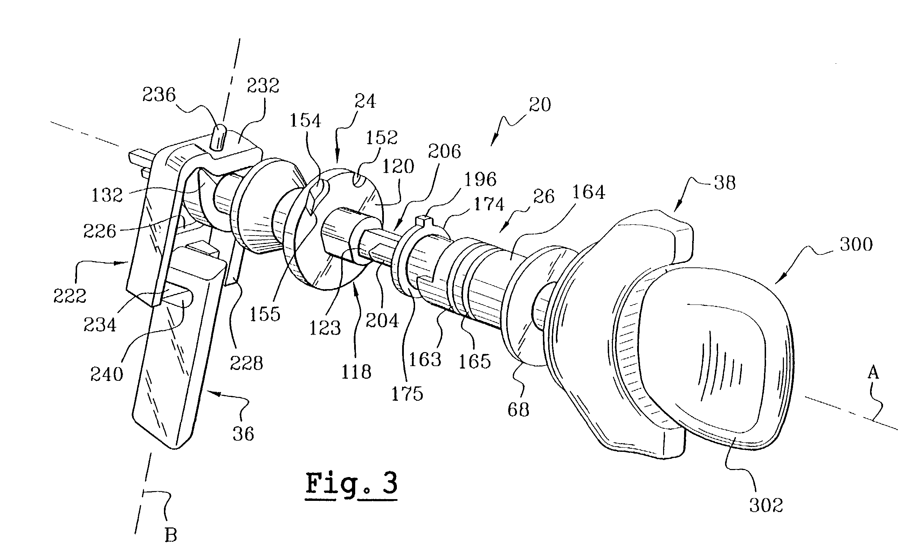

Comme on peut le voir notamment aux figures 2 et 3, l'antivol 20 selon l'invention constitue un ensemble particulièrement compact qui peut être intégré aisément dans un ensemble de colonne de direction de conception générale connue, et notamment dans un boîtier de conception générale connue et qui est conçu pour recevoir un mécanisme d'antivol à verrou mécanique.

L'antivol comporte un boîtier moulé 52 dans lequel est monté le mécanisme d'antivol 20 qui est constitué pour l'essentiel d'un corps fixe ou stator 22, d'un organe de commande manuelle en deux parties comportant un rotor 24 et une tige de commande 26, et d'un sous-ensemble fixe constituant un module 28 rapporté dans le boîtier 52 et qui comporte notamment un électroaimant monostable 30 et un commutateur électrique 32.

L'antivol comporte aussi un interrupteur rotatif 34 à positions multiples lié en rotation à l'extrémité libre avant du rotor 24, et un pêne 36 de blocage en rotation d'un arbre (non représenté) de colonne de direction qui est globalement monté coulissant dans le boîtier 52 selon une direction radiale ou transversale B par rapport à l'axe général A.

Pour sa manipulation, l'organe de commande manuelle en deux parties 24 et 26, est associé à un bouton arrière 38 de manipulation qui est lié en rotation et en translation axiale, dans les deux sens, à l'extrémité libre arrière de la tige de commande 26 de manière à entraîner cette dernière en rotation et en translation axiale dans les deux sens autour et selon l'axe A par rapport au stator fixe 22.

Le stator fixe 22 est une pièce moulée, par exemple en alliage léger, qui comporte un tronçon arrière 40 de forme générale annulaire cylindrique, et un tronçon avant 42 de même forme dont chacun délimite intérieurement un alésage interne 44 et 46 respectivement. L'alésage arrière 44 reçoit à rotation et en coulissement axial la tige arrière 26 de l'organe de commande manuelle, tandis que l'alésage avant 46 délimite une cavité cylindrique, ouverte axialement vers l'avant et qui reçoit le module ou cassette 28 de forme générale complémentaire.

Plus précisément, le corps 48 de la cassette 28 est une pièce moulée de forme générale cylindrique annulaire comportant deux joues latérales opposées 50 pour être positionné et immobilisé, angulairement et axialement, par rapport à une plaque transversale à circuits imprimés 62 qui est un anneau plat d'orientation radiale qui porte notamment sur sa face transversale avant des composants électroniques et/ou électromécaniques parmi lesquels le commutateur électrique 32 et l'électroaimant 30.

Le commutateur électrique 32 comporte un organe de commande de son déclenchement qui est une bille sphérique 70, le positionnement du commutateur 32 avec sa bille 70 étant tels que la bille fait globalement saillie radialement vers l'intérieur.

L'électroaimant 30 est un électroaimant d'orientation axiale avec un corps cylindrique fixe 72 dont l'axe C est parallèle à l'axe A, mais excentré radialement vers l'extérieur par rapport à l'axe A.

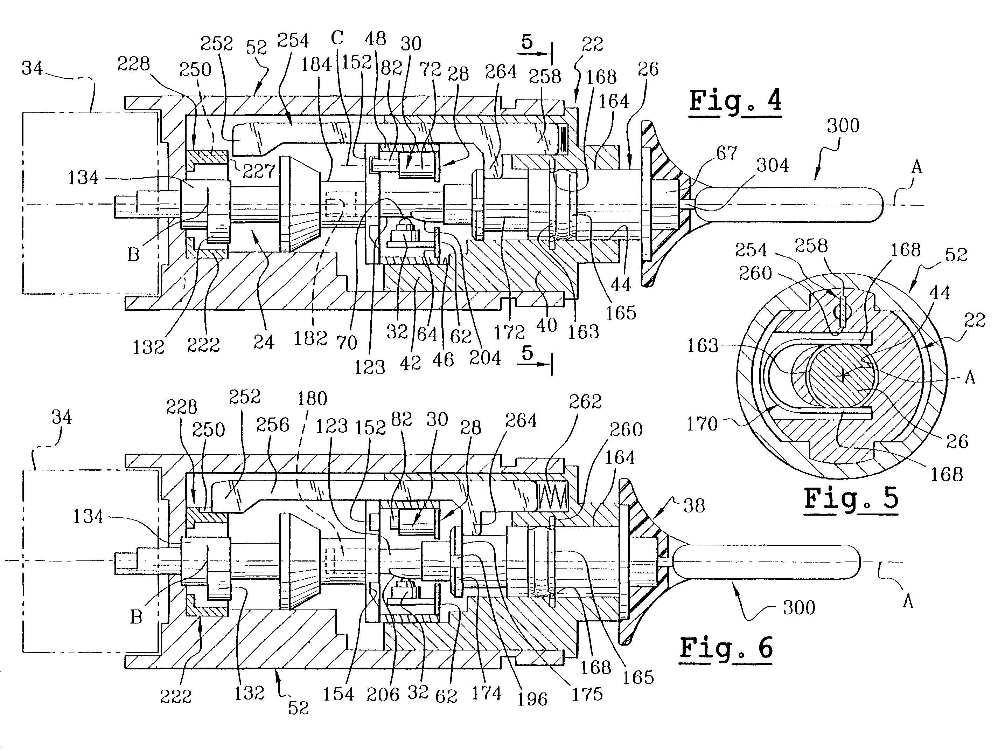

La face arrière du corps 72 avec ses raccordements électriques, est fixée sur la face transversale de la plaque 62, tandis que son corps 72 s'étend dans un logement complémentaire 76 du corps de la cassette dont le fond comporte un trou axial de plus petit diamètre pour permettre le passage en coulissement axial de la tige 82 de sortie de l'électroaimant qui est liée au noyau mobile de ce dernier qui comporte un ressort de rappel (non visible sur les figures) qui le sollicite en permanence vers sa position axiale avant sortie (voir figure 4), c'est à dire lorsque l'enroulement de l'électroaimant 28 n'est pas alimenté électriquement.

Le boîtier 52 est une pièce moulée en alliage léger qui est constitué pour l'essentiel par un corps cylindrique tubulaire 54 d'axe général A et d'un autre corps transversal de forme générale tubulaire 56 d'axe B à l'intérieur duquel le pêne 36 est guidé en coulissement dans un canal 58 de forme complémentaire de celle du pêne afin d'empêcher toute rotation de ce dernier autour de l'axe B.

L'alésage interne 60 du corps 54 comporte deux rainures longitudinales opposées 64 pour le positionnement et l'indexation angulaire du stator 22 dont le corps comporte à cet effet deux nervures complémentaires 66.

L'ensemble des composants du mécanisme d'antivol 20 est retenu axialement à l'intérieur du corps 52, 54 par un couvercle arrière 74 qui se prolonge axialement vers l'avant par un capot latéral 78 permettant notamment de recevoir les différentes connexions et raccordements électriques de l'antivol avec le faisceau électrique du véhicule.

Le couvercle ou capuchon arrière 74 est traversé centralement par un tronçon d'extrémité libre arrière 67 de la tige de commande 26 auquel est fixé le bouton de commande 38 pour l'entraînement en coulissement axial et en rotation dans les deux sens de la tige de commande 26.

La tige de commande 26 comporte une collerette radiale arrière 68 au-delà de laquelle s'étend axialement vers l'avant le tronçon principal cylindrique 164 de la tige.

Afin d'assurer l'indexation axiale de la tige de commande 26 par rapport au stator 22, dans ses deux positions axiales fonctionnelles tirée (figure 4) et poussée (figure 6), le tronçon 164 comporte deux gorges, avant 163 et arrière 165 respectivement, dans chacune desquelles peuvent être reçues les deux branches opposées 168 d'une épingle élastique d'indexation 170 qui est logée dans le stator 22.

Au delà de son tronçon principal arrière de grand diamètre 164, le corps de la tige 26 se prolonge axialement vers l'avant par un tronçon intermédiaire de diamètre réduit 172, puis par une collerette radiale extérieure 174 comportant une patte radiale d'indexation angulaire 196, et enfin par un tronçon d'extrémité libre avant 122 de forme générale cylindrique 123.

Le tronçon 122 comporte une came en relief 204 reliée à la surface cylindrique 123 par une rampe 206 d'extrémité avant.

Le tronçon d'extrémité avant 122 de la tige de commande 126 comporte aussi deux méplats 180 qui sont prévus pour être reçus dans un logement complémentaire 182 formé dans le tronçon d'extrémité libre arrière 184 du rotor 24 pour assurer la liaison en rotation dans les deux sens entre la tige 26 et le rotor 24, tout en permettant un coulissement axial de la tige 26 par rapport au rotor 24 qui est immobilisé en translation axiale dans les deux sens par rapport au stator 22.

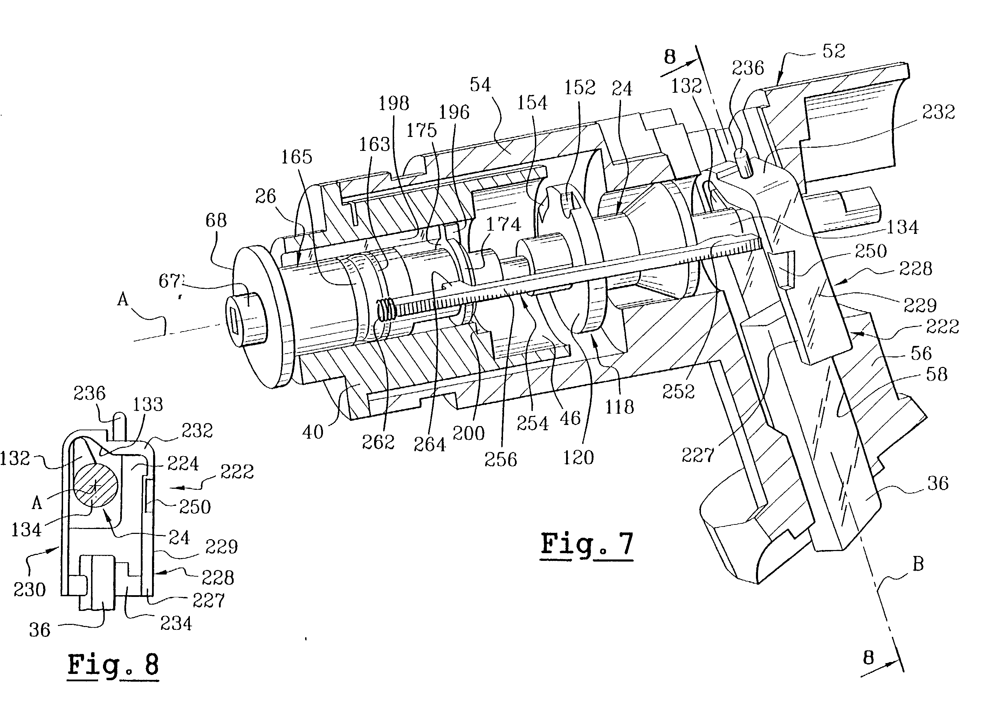

Comme on peut le voir notamment à la figure 7, le tronçon arrière 40 du stator 22 comporte une rainure axiale 198 dans laquelle est reçue en coulissement la patte d'indexation angulaire 196, lorsque la tige 26 est en position arrière tirée.

La rainure 198 débouche axialement vers l'avant en direction de la cavité 46 de manière que, lorsque la tige 26 est en position avant poussée, la tige 26 avec sa patte d'indexation 196 puisse tourner dans les deux sens autour de l'axe A en entraînant avec elle en rotation le rotor 24.

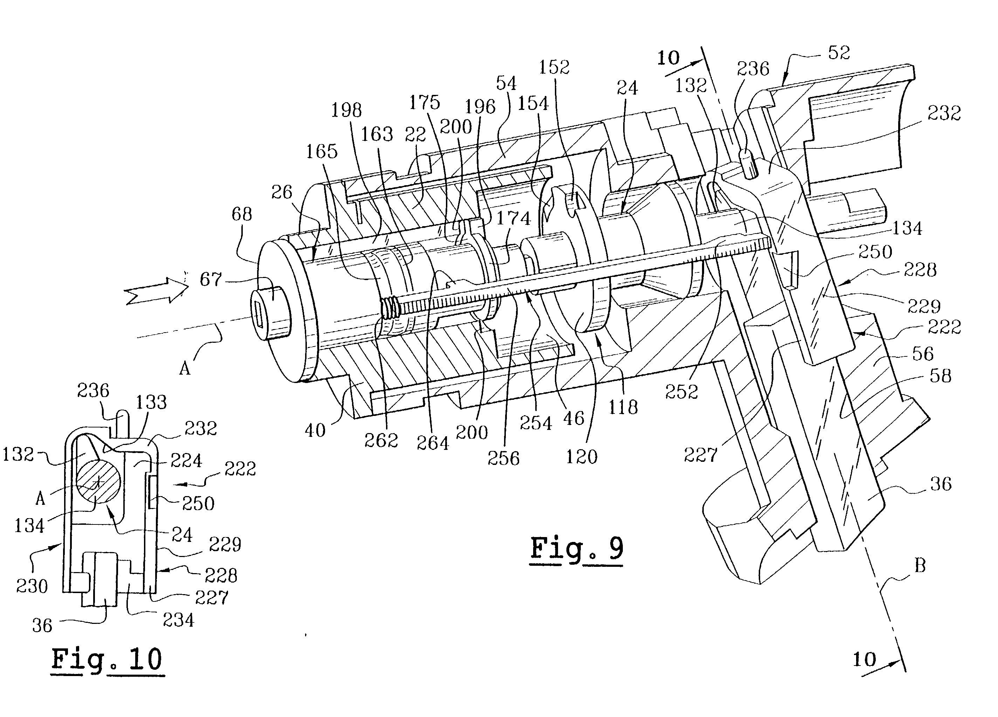

En position avant poussée de la tige 26, la patte d'indexation 196 est reçue à rotation dans une gorge complémentaire 200 du stator 22 (voir notamment figure 9).

Au delà de son tronçon d'extrémité libre arrière 184, le rotor comporte une collerette radiale extérieure 118 dont la face transversale arrière 120 comporte une première encoche 152 qui est susceptible de recevoir l'extrémité libre avant de la tige 82 de l'électroaimant 30 pour bloquer le rotor 22 en rotation.

La face arrière 120 comporte également une seconde encoche 154 qui rejoint la face arrière 120 avec une pente 155 permettant son franchissement dans un sens. Notamment dans le cas d'un véhicule équipé d'une boîte de vitesses automatique, la pente autorise la rotation jusqu'aux positions MARCHE et DEMARRAGE. L'encoche interdit la rotation de la position ACCESSOIRES vers la position STOP si, par exemple, le levier de commande de la boîte de vitesses n'est pas en position "PARKING".

Au voisinage de son extrémité axiale avant, le rotor 24 comporte une came 132 de commande des déplacements du pêne 36 qui se présente globalement sous la forme d'un doigt radial qui fait saillie par rapport au tronçon cylindrique avant 134 du rotor 24.

Le pêne 36 est associé, pour la commande de ses déplacements, à une tirette 222 sur laquelle agit la came 132.

La tirette 222 est une pièce de forme générale parallélépipédique rectangle creuse qui comporte, dans sa face transversale ou fond avant 224 une fenêtre 226 qui est traversée par le tronçon avant du rotor 24 pour l'entraînement en rotation de l'interrupteur 34.

La tirette 222 comporte deux branches ou joues latérales 228 et 230, qui sont d'orientation radiale parallèle à l'axe B et qui sont reliées entre elles par une paroi supérieure 232 et par une paroi inférieure 234.

La joue supérieure 232 comporte un pion 236 de centrage d'un ressort hélicoïdal de compression 238 qui constitue le ressort de rappel de la tirette 222, et donc du pêne 36, en position sortie d'antivol en prenant appui contre une partie en vis-à-vis du corps 54 du boîtier 52 qui est ici constituée par la face interne d'un bouchon rapporté 240 permettant la mise en place radiale selon l'axe B du pêne 36 et de sa tirette 222 dans le corps 56 du boîtier 52 (voir figure 1).

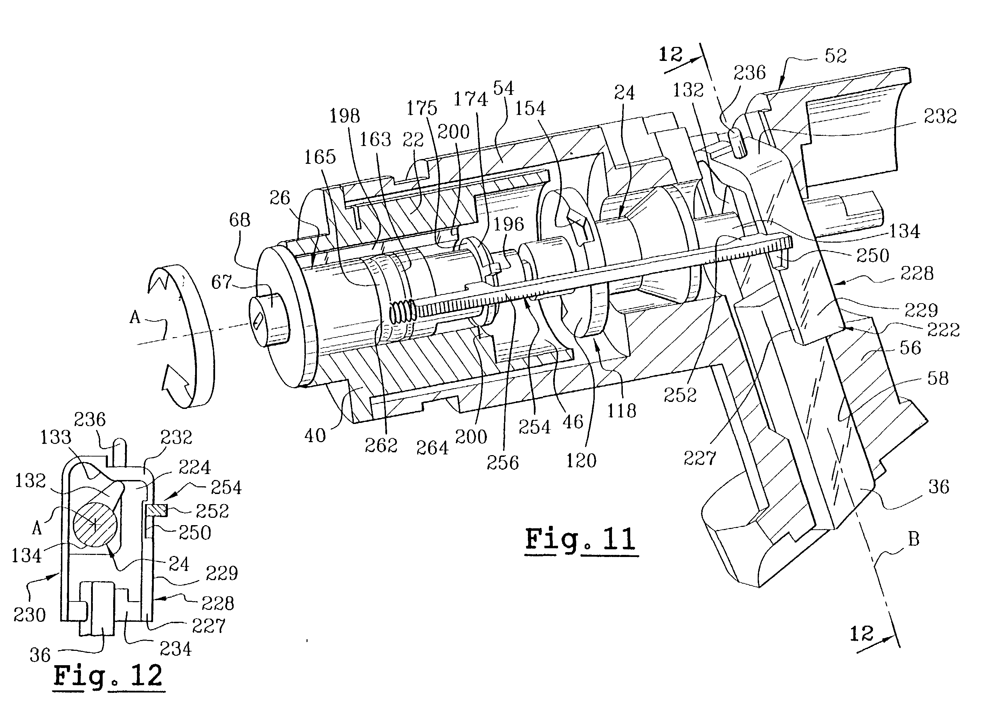

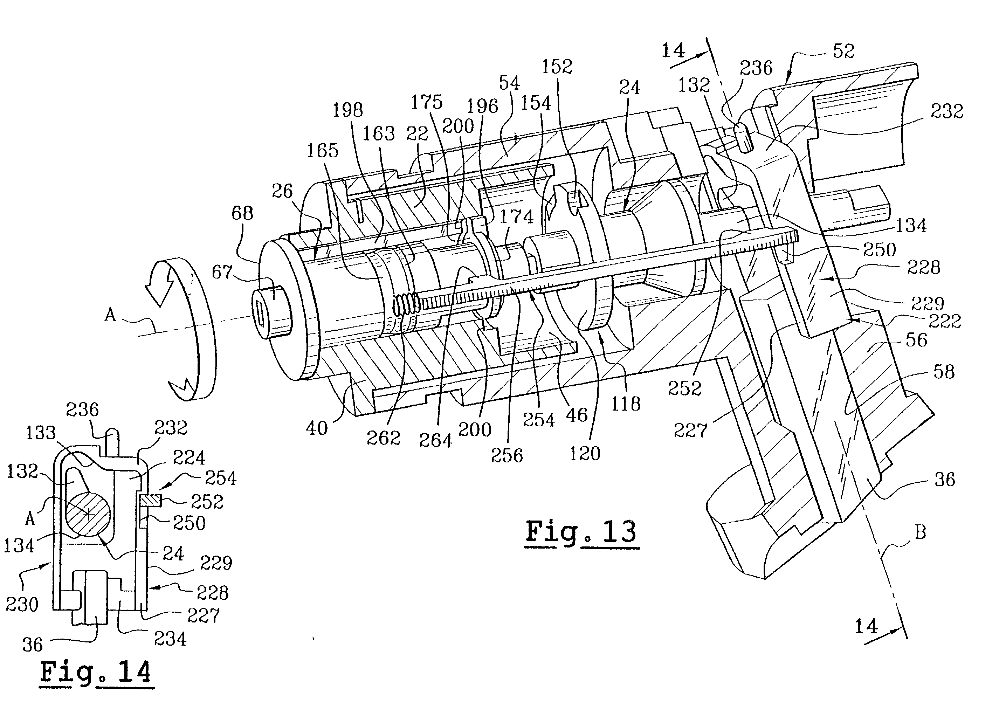

Comme on peut le voir notamment aux figures 8, 10, 12 et 14, le doigt formant came 132 coopère avec le profil interne en vis-à-vis 133 formant rampe aménagé dans la surface radialement intérieure de la paroi supérieure 232 de la tirette 222.

Pour l'entraînement du pêne 36, ce dernier comporte, au voisinage de son extrémité radialement intérieure, une encoche ou fente 240 dans laquelle est reçue la paroi inférieure 234 de la tirette 222 afin de lier ces deux éléments en translation dans les deux sens selon l'axe B.

Comme on peut le voir notamment aux figures 4, 6 et 7, la joue latérale 228 de la tirette 222 est délimitée par une face externe plane 229 et par une face transversale arrière 227 qui sont toutes les deux d'orientation radiale et perpendiculaires entre elles.

Conformément aux enseignements de l'invention, une encoche 250 de retenue du pêne 36 en position rentrée escamotée est formée dans la tirette 222, et plus précisément dans sa joue latérale 228.

L'encoche 250 est ouverte axialement vers l'arrière, c'est-à-dire qu'elle débouche dans la face transversale arrière 227 de la joue 228 et elle débouche également latéralement vers l'extérieur dans la face 229 de la joue latérale 228.

L'encoche 250 est prévue pour recevoir l'extrémité libre avant 252, formant doigt de retenue du pêne 36-222 d'une barre 254 d'orientation axiale qui constitue l'organe de retenue de pêne au sens de l'invention.

La barre 254 est une pièce en tôle découpée de forme générale allongée dont le corps 256 en forme de tige plate est monté coulissant axialement dans le stator 22 (voir figure 5).

L'extrémité axiale arrière 258 de la barre 254, 256 est reçue en coulissement axial dans un logement complémentaire 260 du stator 22 avec interposition d'un ressort hélicoïdal de compression 262 qui prend appui contre le fond axial arrière du logement 260 pour solliciter axialement en permanence et vers l'avant l'organe 254 de retenue du pêne 222, 36, c'est à dire dans le sens du blocage du pêne en position rentrée.

Au voisinage de son extrémité axiale arrière 258, la tige plate 256 comporte une patte 264 de commande de ses déplacements entre les deux positions extrêmes axiales qu'elle est susceptible d'occuper et qui sont représentées respectivement aux figures 4 et 6.

La patte 264 s'étend radialement vers l'axe A dans le logement correspondant au tronçon intermédiaire de diamètre réduit 172 de la tige de commande 26.

Sous l'action du ressort 262, la patte de commande 264 est en permanence en appui axial vers l'avant contre la face transversale arrière 175 de la collerette radiale 174 de la tige de commande 26.

Ainsi, lorsque la tige de commande 26 est dans sa position arrière tirée représentée notamment à la figure 4, l'organe 254 de retenue du pêne est en position axiale arrière effacée, à l'encontre de son ressort de rappel 262, et son extrémité libre avant 252 formant doigt de retenue du pêne est située en dehors de l'encoche 250 et en regard de la face transversale arrière 227 de la joue latérale 228, avec un jeu axial fonctionnel par rapport à cette dernière.

Par contre, comme on peut le voir à la figure 6, le doigt 252 est susceptible d'être reçu axialement dans l'encoche 250 de la tirette 222, associée au pêne 36, pour retenir ces deux éléments radialement vers l'intérieur dans le boîtier 52, 56.

Dans cette position axiale avant active de l'organe 254 de retenue du pêne, ce dernier est bloqué en translation selon l'axe B et l'arbre de la colonne de direction est ainsi libre de tourner.

La position active, axialement vers l'avant, de l'organe 254 de retenue du pêne est déterminée par la position avant poussée de la tige de commande 26 qui est indexée axialement dans cette position par rapport au stator 22, grâce à l'épingle 170 qui est reçue dans la gorge 163.

Du fait du guidage axial de la barre 254 dans le corps du stator 22, il n'existe aucun risque d'échappement accidentel du doigt 252 hors de l'encoche 250, et ceci quelles que soient notamment les vibrations auxquelles est soumis le mécanisme d'antivol lors du roulage du véhicule.

Le tarage du ressort de rappel 262 et de l'épingle élastique 170 sont tels que cette dernière retient la tige de commande 26 dans sa position axiale arrière tirée malgré l'effort appliqué par le ressort 262 à l'organe 254, et donc malgré l'effort appliqué par la patte de commande 264 à la tige de commande 26 en coopérant avec la face transversale arrière 175 de la collerette 174.

Conformément à un aspect de l'invention, il peut être prévu un transpondeur de secours qui est ici réalisé sous la forme d'une "clef" de secours 300 dont la tête 302 loge le transpondeur (non représenté) et se prolonge axialement vers l'avant par une tige plate de clef 304 qui comporte, sensiblement à mi-longueur, deux encoches radiales opposées 306.

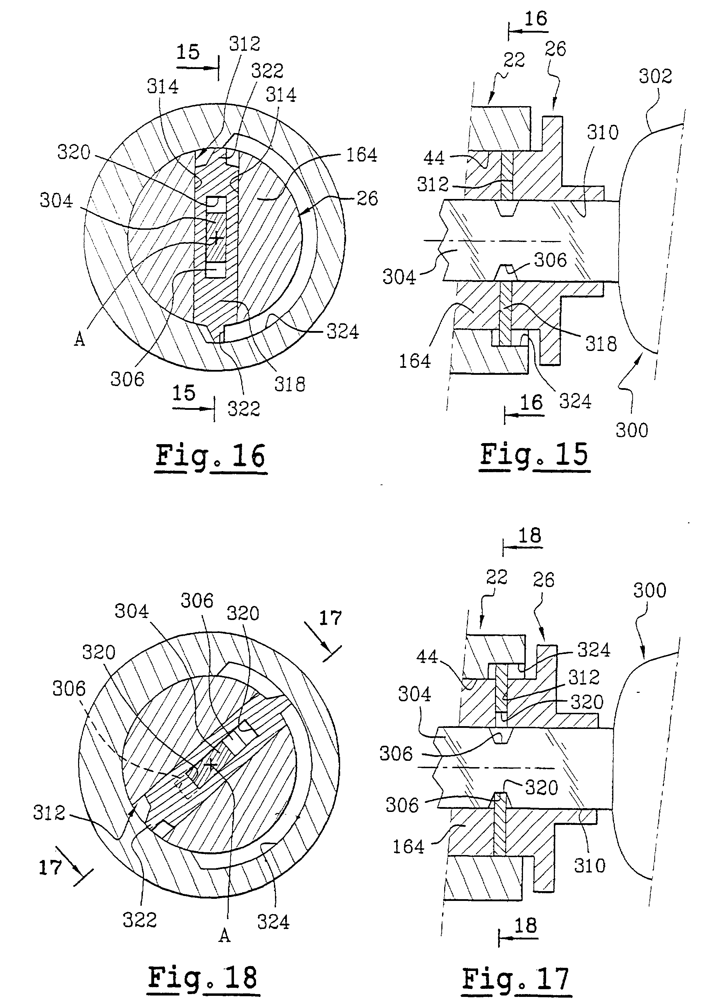

La tige de clef 306 est prévue pour être reçue axialement à travers une première fente 308 formée dans le bouton 38 et à l'intérieur d'une fente complémentaire 310 formée dans la partie arrière du corps de la tige de commande 26, comme on peut le voir notamment aux figures 15 à 18. La fente 310 débouche à cet effet axialement vers l'arrière.

Le tronçon 164 de grand diamètre du corps de la tige de commande 26 comporte une fente radiale 312 qui est débouchante radialement à ses deux extrémités opposées et qui est délimitée par deux faces latérales opposées 314.

La fente 312 constitue ainsi une glissière dans laquelle est reçue à coulissement une paillette 318 de blocage axial de la clef de secours 300.

A cet effet, selon une conception générale connue dans le domaine des verrous à barillet, la partie centrale du corps de la paillette 318 comporte une fenêtre rectangulaire 320 qui, lorsque la tige de commande 26 est dans sa position angulaire de repos représentée aux figures 15 et 16, permet l'introduction et l'extraction axiale de la clef de secours, c'est-à-dire de la tige 304 dans la fente 310.

La paillette 318 est positionnée radialement dans-cette position angulaire de repos, du fait de la coopération de ses deux doigts d'extrémité radiale 322 qui coopèrent avec un profil de came complémentaire 324 formé en vis-à-vis dans l'alésage interne arrière 44 du stator 22.

Au contraire, lorsque la tige de commande 26 quitte sa position angulaire de repos pour occuper une autre position, en tournant dans le sens horaire en considérant les figures 16 et 18, le profil de came 324 provoque un déplacement radial de la paillette 318 dans la fente 312, de manière que le bord inférieur de la fenêtre 320 soit reçu dans l'encoche inférieure 306 de la tige 304 de la clef de secours 300 qui est ainsi immobilisée axialement par rapport à la tige de commande 26, et donc par rapport au stator 22 dans la mesure où, dans une telle position angulaire autre que celle de repos, la tige de commande 26 est elle-même immobilisée axialement par rapport au stator 22.

En utilisation du véhicule, qu'il s'agisse de la position "+ACCESSOIRES", "+CONTACT" ou de la position "DEMARRAGE", le transpondeur de secours est ainsi toujours axialement à proximité d'une antenne de secours (non représentée) qui est intégrée au stator 22 au voisinage de l'extrémité arrière de celui-ci, ou bien au couvercle 74.

Lorsque la tige de commande 26 est ramenée angulairement dans sa position de repos illustrée aux figures 15 et 16, sous l'action du profil de came 324 qui repousse la paillette 318, il est alors à nouveau possible d'extraire axialement la clef de secours 300.

De par sa forme et son ergonomie, la tête 302 de la clef de secours 300 constitue, avec le bouton de commande 38, l'organe de préhension et de manipulation de la tige de commande 26 et du rotor 24.

Il est bien entendu prévu des moyens (non représentés) pour déterminer deux positions angulaires extrêmes du rotor 24 par rapport au stator 22, correspondant à ses positions angulaires de repos et à la position "DEMARRAGE", ainsi que des moyens élastiques pour rappeler le rotor 24 en position "+CONTACT" (aussi appelée position MARCHE) après que l'on ait sollicité le démarreur.

Lorsque la tige de commande 36 est dans sa position axiale poussée ou enfoncée et que le rotor est dans sa position angulaire axiale extrême de repos ou d'arrêt illustrée à la figure 6, la rampe 206 coopère avec la bille 70 pour la solliciter radialement vers l'extérieur, l'amener sur la portée cylindrique 204 et donc actionner le commutateur 32.

Au contraire, dans la même position angulaire du rotor, si l'on tire axialement vers l'arrière le bouton 38 et la tige de commande 26, la rampe 206 recule axialement vers l'arrière et elle n'agit plus sur la bille 70 du commutateur qui change à nouveau d'état de commutation (figure 4).

Ainsi, l'enfoncement ou la traction sur la tige 26 (qui ne sont possibles que la seule position angulaire extrême de repos ou position "STOP") provoque un changement d'état du commutateur 32 qui se traduit par la production d'un signal envoyé au circuit électronique porté par la plaque à circuits imprimés 62.

De la même manière, lorsque la tige 26 est dans sa position extrême axiale avant enfoncée par rapport au rotor 24 et que l'on entraîne ce dernier en rotation par rapport au stator 22 en quittant la position angulaire extrême d'arrêt, on provoque aussi un changement d'état du commutateur 32, et ceci en agissant sur la bille 70 qui constitue également dans ce cas l'organe de déclenchement du commutateur 32.

Ainsi, lorsque le rotor quitte sa position angulaire extrême de repos (après que l'électroaimant 30 ait été commandé à cet effet pour escamoter la tige 82 hors de l'encoche 152 lorsque l'utilisateur a été identifié comme étant un utilisateur autorisé) pour tourner sous l'action du bouton 38, le commutateur change d'état et provoque alors la libération de la tige 82 qui vient en appui axial contre la périphérie en vis-à-vis de la face transversale arrière 120.

Le rotor peut alors par exemple atteindre son autre position angulaire extrême "DEMARRAGE" correspondant à l'actionnement du démarreur et revenir ensuite en position marche sous l'action du ressort non représenté de rappel angulaire du rotor. Tant que la tige 82 est n'est pas escamotée vers l'arrière par alimentation de l'électroaimant 30, il est impossible de ramener le rotor dans sa position angulaire extrême d'arrêt et ceci du fait de la présence de l'encoche 154.

A cet effet, lors de course de retour, la came 204 agit sur la bille 70 et le commutateur 32 qui, après temporisation, provoque l'alimentation de l'électroaimant et donc l'effacement de la tige 82, pour permettre alors d'atteindre à nouveau la position angulaire extrême d'arrêt "STOP".

Ce retrait de la tige 82 n'est possible qu'après vérification du code de l'identifiant électronique de l'utilisateur.

Les moyens d'échange et de vérification du code de l'identifiant ne sont pas représentés et sont de conception générale connue, qu'il s'agisse d'un transpondeur, associé à une antenne du véhicule, porté par le conducteur dans le cas d'un système d'antivol dit "mains libres", ou introduit dans un lecteur à bord du véhicule.

Pour obtenir un tel blocage en rotation de l'arbre de la colonne de direction l'utilisateur tire axialement le bouton 38 et la tige de commande 26 vers l'arrière, ce qui provoque à nouveau un changement d'état du commutateur car la bille quitte la surface 204 et "chute" radialement. Ce changement d'état permet de libérer à nouveau la tige 82 qui pénètre axialement vers l'arrière dans l'encoche 152. Ce retrait volontaire de la "clef" 38-26 provoque donc le blocage en rotation du rotor 24 de la clef de commande manuelle 38-24-26 et la libération du pêne 36 qui bloque en rotation la colonne de direction.

Lors de l'enfoncement à nouveau du bouton en vue de provoquer la libération de la colonne de direction et en vue de permettre à cet effet la rotation du rotor 24 qui entraîne la came 132 de commande du pêne 36 et qui entraîne l'interrupteur rotatif 34, l'action sur la bille 70 provoque une interrogation de l'identifiant par le système d'antivol électronique en vue de vérifier que le code reçu de l'identifiant par le circuit électronique d'antivol est correct, puis provoque l'alimentation de l'électroaimant 30 dont l'alimentation est rendue possible par le circuit électronique porté par la plaque 62 qui a reçu un signal indiquant que le code est correct.

Le fonctionnement des moyens de retenue du pêne 36-222 comportant la barre 254 en association avec la tige de commande est plus particulièrement illustré par les couples successifs de figures 7-8, 9-10, 9-10, 11-12 et 13-14.

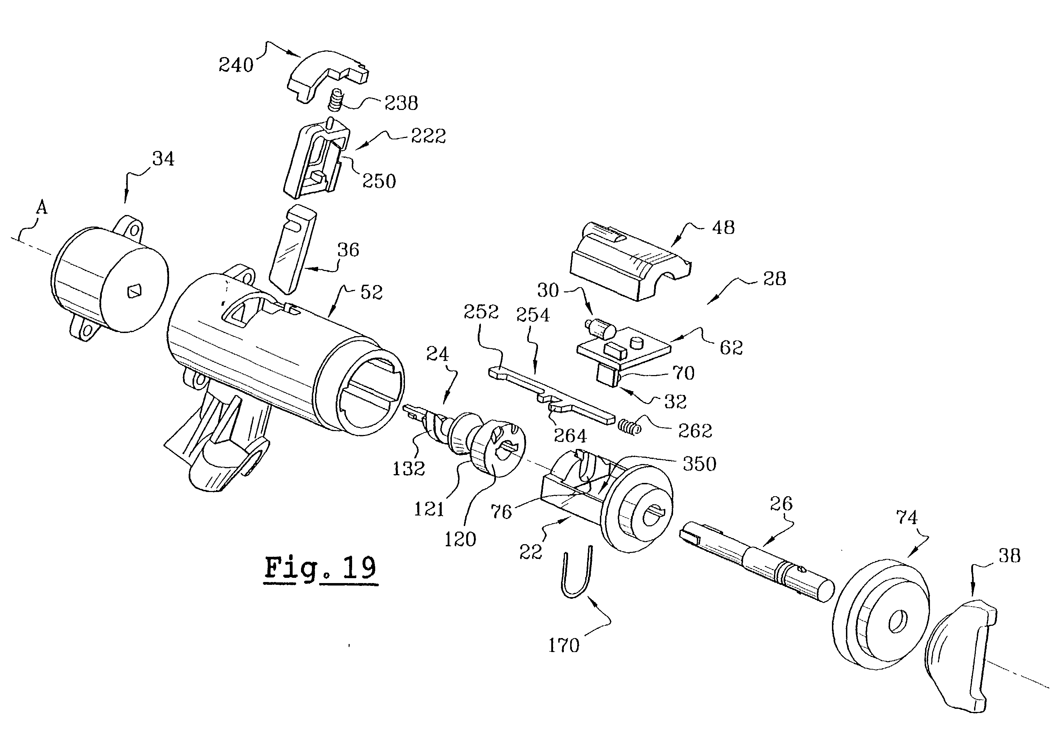

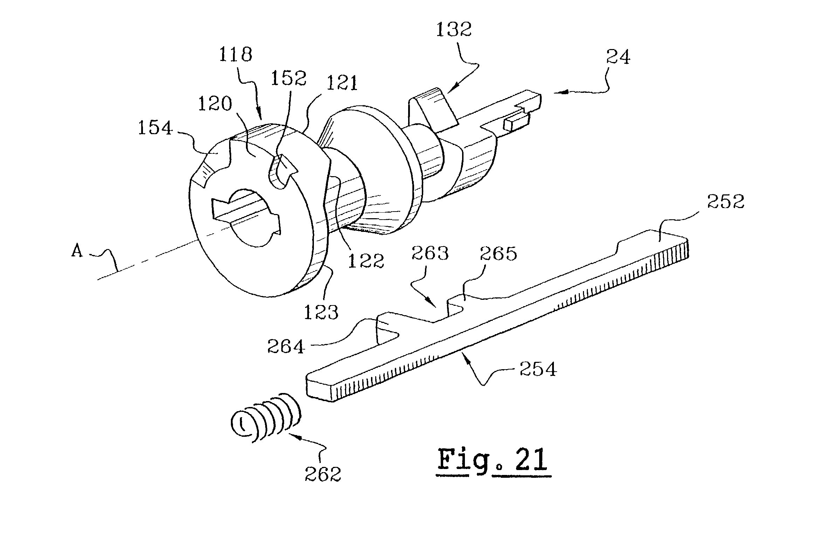

On décrira maintenant le deuxième mode de réalisation illustré aux figures 19 à 21, et ceci en procédant essentiellement par comparaison avec le premier mode de réalisation.

On voit tout d'abord à la figure 19 que le module 28 comportant la plaque 62 à circuits imprimés qui porte l'électro-aimant 30 et le commutateur 32, est ici d'orientation axiale et est reçue dans un évidement complémentaire 350 du stator 22 dont la partie d'extrémité axiale avant comporte un passage 76 pour l'électroaimant 30. La plaque 62 est maintenue dans le logement 350 par un corps moulé 48 de manière à constituer un module rapporté 28 analogue à celui décrit précédemment.

En ce qui concerne l'organe de commande manuelle constitué par l'association de la tige 26 et du rotor 24, on constate que la collerette 118 du rotor 24 est plus épaisse axialement, sur un secteur angulaire déterminé de sa circonférence, en étant délimitée par la face transversale arrière 120 et par une face transversale avant 121 qui se prolonge par une pente 122 pour atteindre un tronçon 123, décalé axialement vers l'arrière, qui délimite avec la face 120 un secteur angulaire de plus faible épaisseur axiale de la collerette 118.

La barre 254 de retenue du pêne comporte, outre sa patte de commande 264, une patte radiale de sécurité 265 qui est décalée axialement vers l'avant par rapport à la patte de commande 264 pour délimiter avec cette dernière une encoche 263 dans laquelle peut être reçu en rotation le secteur angulaire de plus grande épaisseur 120-121 de la collerette 118.

Pour la commande des déplacements axiaux de la barre 254, la tige de commande 26 comporte une patte radiale 196 qui, comme précédemment coopère avec la patte 264 de commande de la barre 254 de retenue du pêne.

Le tronçon angulaire de plus grande épaisseur 120-121 de la collerette 118 constitue, lorsqu'il est reçu dans l'encoche 263, une sécurité empêchant un recul axial vers l'arrière de la barre 254, c'est-à-dire empêchant toute libération accidentelle du pêne 36 afin d'éviter tout blocage intempestif de la colonne de direction lors du roulage du véhicule. La pente 122 assure de plus un engagement positif de la barre 254 dans son logement 222 en cas de coincement du ressort 262.

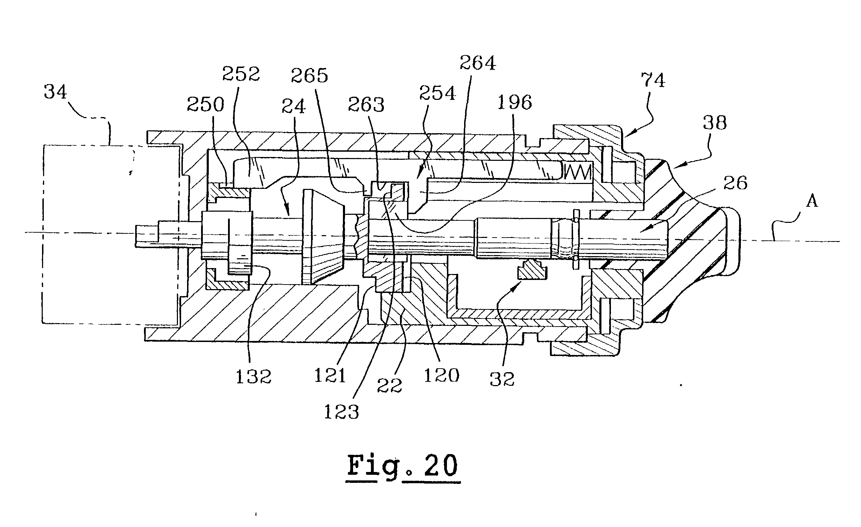

Au contraire, lorsque le rotor 24 avec la tige de commande 26 est dans sa position angulaire de repos illustrée à la figure 20, c'est le tronçon angulaire d'épaisseur réduite 120-123 de la collerette 118 qui est reçu dans l'encoche 263 et il est alors possible de déplacer la barre 254 de retenue du pêne axialement dans les deux sens, notamment afin de permettre la libération du pêne 36-222 en tirant sur le bouton de commande 38, ou afin de permettre le réarmement de l'antivol en poussant à nouveau sur le bouton 38 axialement vers l'avant.

Enfin, dans ce second mode de réalisation, on notera qu'il n'est pas prévu une possibilité d'associer une clef de secours à l'antivol.

## Revendications

1. Antivol de véhicule automobile du type comprenant un mécanisme d'antivol (20) comportant un boîtier (52, 54, 56) dans lequel un organe (24, 26, 38) de commande manuelle du démarrage du moteur du véhicule et du verrouillage de la colonne de direction du véhicule :
- est monté mobile axialement entre une position, arrière tirée, de verrouillage de la colonne de direction et une position, avant poussée, de déverrouillage de la colonne de direction ;
- est monté à rotation entre au moins une position angulaire de repos et une position angulaire d'utilisation, dans laquelle dans laquelle il ne peut être tiré axialement vers l'arrière ;
- et est lié en rotation à un organe de sortie rotatif (132) formant came qui est susceptible de coopérer avec un pêne (36, 222) pour commander les déplacements de ce dernier qui est monté coulissant dans le boîtier (52, 56), selon une direction (B) globalement radiale par rapport à l'axe (A) de rotation de l'organe de commande manuelle (24, 26, 38), entre une position sortie, radialement vers l'extérieur, d'antivol vers laquelle il est sollicité élastiquement (238) et dans laquelle il fait saillie à travers une ouverture (58) du boîtier (56) pour bloquer en rotation un organe de la colonne de direction lorsque l'organe de commande manuelle (24, 26, 38) est en position angulaire de repos et en position arrière tirée de verrouillage, et une position rentrée escamotée à l'intérieur du boîtier lorsque l'organe de commande manuelle (24, 26, 38)est en position avant poussée,
et du type dans lequel le pêne (36, 222) est retenu radialement en position rentrée escamotée, par un organe (254) de retenue de pêne (36, 222) qui est monté coulissant dans le boîtier (52, 54), parallèlement à l'axe (A) de déplacement et de rotation de l'organe de commande manuelle (24, 26, 38), entre une position effacée ou rétractée, et une position active de retenue du pêne vers laquelle il est sollicité élastiquement (262) et dans laquelle un doigt de retenue (252), formé à l'extrémité libre avant de l'organe (254) de retenue du pêne, est reçu dans une encoche complémentaire (250) du pêne,
**caractérisé en ce que** les déplacements de l'organe (254) de retenue du pêne vers sa position axiale arrière effacée, à l'encontre de son ressort (262) de rappel, sont commandés par le déplacement axial vers l'arrière de l'organe de commande manuelle (26, 174, 175) jusqu'à sa position arrière tirée de verrouillage, et **en ce que** l'antivol comporte des moyens (170) déformables élastiquement pour indexer axialement l'organe de commande manuelle (26) dans sa position arrière tirée de verrouillage et pour le retenir dans cette position à l'encontre de l'effort de rappel exercé sur l'organe (254) de retenue du pêne par son ressort de rappel (262).

2. Antivol selon la revendication 1, **caractérisé en ce que** l'organe de commande manuelle (26) comporte une collerette radiale (174) dont la face annulaire arrière (175) coopère avec une patte (264) de commande de l'organe (254) de retenue du pêne qui s'étend radialement vers l'intérieur en regard de cette face annulaire (175).

3. Antivol selon la revendication précédente, **caractérisé en ce que** l'organe de commande manuelle (26) comporte une patte (196), de retenue axiale de l'organe de commande manuelle par rapport au boîtier (52, 22) formant stator, qui s'étend radialement vers l'extérieur depuis le bord périphérique de ladite collerette (174) et qui est reçue en coulissement axial dans une rainure complémentaire (198) du boîtier (52, 22) pour permettre les déplacements axiaux de l'organe de commande manuelle (26) entre ses deux positions axiales arrière tirée de verrouillage et avant poussée de déverrouillage.

4. Antivol selon l'une quelconque des revendications précédentes, **caractérisé en ce qu'**il comporte :
- un organe motorisé (30), notamment électromagnétique, de blocage en rotation de l'organe de commande (24, 26, 38) par rapport au boîtier (52, 22) dont la libération est commandée lorsqu'un signal codé d'antivol est fourni par une unité d'identification à un circuit électronique de commande de l'organe de blocage ;
- et un commutateur (32, 70), de déclenchement d'une étape d'interrogation et d'identification, qui est porté par le boîtier (52, 22, 62) et qui est déclenché par l'organe de commande manuelle (26).

5. Antivol selon la revendication précédente, **caractérisé en ce que** l'organe de commande manuelle comporte un rotor avant (24, 132) qui est monté tournant par rapport au boîtier formant stator (52, 22), entre deux positions angulaires extrêmes dont l'une correspond à ladite position angulaire de repos, qui commande les déplacements du pêne (36, 222), et qui est immobilisé axialement par rapport au boîtier formant stator, et une tige (26) arrière de commande qui est montée coulissante axialement par rapport au rotor (24), auquel elle est liée en rotation, entre une position arrière tirée de verrouillage et une position extrême avant de déverrouillage.

6. Antivol selon la revendication précédente, **caractérisé en ce que** précédente prise en combinaison avec la revendication 3, **caractérisé en ce que** ladite collerette radiale (174) de commande de l'organe (254) de retenue du pêne appartient à la tige arrière de commande (26).

7. Antivol selon la revendication 5, **caractérisé en ce que** lesdits moyens déformables élastiquement (170) pour indexer axialement l'organe de commande manuelle (26) dans sa position arrière tirée de verrouillage et pour le retenir dans cette position coopèrent avec un tronçon (164, 163, 165) de la tige arrière de commande (26).

8. Antivol selon l'une quelconque des revendications 5 à 7, **caractérisé en ce que** l'organe électromagnétique (30) de blocage en rotation de l'organe de commande (24, 26, 38) coopère avec le rotor avant (24, 152) pour le bloquer en rotation.

9. Antivol selon l'une quelconque des revendications 5 à 8, **caractérisé en ce que** l'organe électromagnétique de blocage est un électroaimant (30) d'orientation axiale (C) dont le noyau est sollicité élastiquement en position sortie par un ressort de rappel de manière à être reçu dans au moins une encoche (152) de blocage formée dans le rotor (24, 118, 120) lorsque ce dernier est dans sa position angulaire de repos, et **en ce qu'**il est susceptible d'être rappelé électromagnétiquement en position rentrée de manière à libérer l'organe de commande manuelle (24, 26, 38) en rotation.

10. Antivol selon la revendication précédente, **caractérisé en ce que** l'encoche de blocage (152) est formée dans une face annulaire arrière (120) du rotor (24, 118) de l'organe de commande manuelle (24, 26, 38).

11. Antivol de véhicule automobile selon la revendication précédente, **caractérisé en ce que** l'organe électromagnétique de blocage (30) et le commutateur de déclenchement (32) appartiennent à un sous-ensemble (28, 62) constituant un sous-ensemble rapporté dans le boîtier (52, 22).

12. Antivol selon la revendication précédente, **caractérisé en ce que** le sous-ensemble rapporté (28) comporte une plaque à circuits imprimés (62) qui porte ledit commutateur (32) et l'organe électromagnétique (30) de blocage.

13. Antivol selon la revendication précédente, **caractérisé en ce que** la plaque à circuits imprimés (62) est en forme d'anneau plat d'orientation transversale.

14. Antivol selon la revendication 12, **caractérisé en ce que** la plaque à circuits imprimés (62) est d'orientation axiale.

15. Antivol selon l'une quelconque des revendications précédentes, **caractérisé en ce que** l'extrémité axiale arrière de la tige de commande (26) est liée en translation axiale et en rotation avec un bouton de manoeuvre (38).

## Claims

1. Anti-theft device for a motor vehicle of the type comprising an anti-theft mechanism (20) comprising a housing (52, 54, 56) in which an element (24, 26, 38) for manually controlling the starting of the engine of the vehicle and the locking of the steering column of the vehicle:
- is mounted to move axially between a pulled back position in which the steering column is locked and a pushed forward position in which the steering column is unlocked;
- is mounted to rotate between at least one inoperative angular position and one operative angular position in which [in which] it cannot be pulled axially towards the rear.
- and is connected in rotation with a rotary output element (132) forming a cam which is capable of cooperating with a bolt (36, 222) for controlling the displacement of the latter which is mounted to slide in the housing (52, 56) in a generally radial direction (B) with respect to the axis (A) of rotation of the manual control element (24, 26, 38) between a radially outwardly extended anti-theft position towards which it is urged resiliently (238) and in which it projects through an opening (58) in the housing (56) in order to lock an element of the steering column in rotation when the manual control element (24, 26, 38) is in the inoperative angular position and in the pulled back locked position and a retracted position inside the housing when the manual control element (24, 26, 38) is in the pushed forward position.
and of the type in which the bolt (36, 222) is retained radially in the retracted position by an element (254) for retaining the bolt (36, 222) which is mounted to slide in the housing (52, 54) parallel to the axis (A) of displacement and of rotation of the manual control element (24, 26, 38) between a retracted position and an operative position for retaining the bolt towards which it is urged resiliently (262) and in which a retaining finger (252) formed at the front free end of the element (254) for retaining the bolt is received in a complementary notch (250) in the bolt,
**characterised in that** the displacement of the element (254) for retaining the bolt towards its retracted rear axial position against its return spring (262) is controlled by the axially rearward displacement of the manual control element (26, 174, 175) into its pulled back locked position, and **in that** the anti-theft device comprises elastically deformable means (170) for axially indexing the manual control element (26) in its pulled back locked position and for retaining it in this position against the return force exerted on the element (254) for retaining the bolt by its return spring (262).

2. Anti-theft device according to claim 1, **characterised in that** the manual control element (26) comprises a radial collar (174) the rear annular face (175) of which cooperates with a lug (264) for controlling the element (254) for retaining the bolt which extends radially inwards opposite this annular face (175).

3. Anti-theft device according to the preceding claim, **characterised in that** the manual control element (26) comprises a lug (196) for axially retaining the manual control element with respect to the housing (52, 22) forming a stator which extends radially outwards from the peripheral edge of the said collar (174) and which is axially slidably received in a complementary groove (198) in the housing (52, 22) in order to allow for the axial displacement of the manual control element (26) between its two axial positions, i.e. the pulled back locked position and the pushed forward unlocked position.

4. Anti-theft device according to any one of the preceding claims, **characterised in that** it comprises:
- a motor-driven, in particular, electromagnetic element (30) for locking the control element (24, 26, 38) in rotation with respect to the housing (52, 22), its release being effected when a coded anti-theft signal is supplied by an identification unit to an electronic circuit for controlling the locking element,
- and a switch (32, 70) for triggering an interrogation and identification step which is carried by the housing (52. 22. 62) and which is triggered by the manual control element (26).

5. Anti-theft device according to the preceding claim, **characterised in that** the manual control element comprises a front rotor (24, 132) which is mounted to rotate with respect to the housing forming the stator (52, 22) between two end angular positions, one of which corresponds to the said inoperative angular position, which controls the displacement of the bolt (36, 222) and which is fixed axially with respect to the housing forming the stator, and a rear control rod (26) which is mounted to slide axially with respect to the rotor (24), with which it is connected in rotation, between a pulled back locked position and a front end unlocked position.

6. Anti-theft device according to the [preceding, **characterised in that**] preceding claim taken in combination with claim 3, **characterised in that** the said radial collar (174) for controlling the element (254) for retaining the bolt belongs to the rear control rod (26).

7. Anti-theft device according to claim 5, **characterised in that** the said elastically deformable means (170) for axially indexing the manual control element (26) in its pulled back locked position and for retaining it in this position cooperate with a portion (164, 163, 165) of the rear control rod (26).

8. Anti-theft device according to any one of claims 5 to 7, **characterised in that** the electromagnetic element (30) for locking the control element (24, 26, 38) in rotation cooperates with the front rotor (24, 152) in order to lock it in rotation.

9. Anti-theft device according to any one of claims 5 to 8, **characterised in that** the electromagnetic locking element is an electromagnet (30) extending in an axial direction (C), the core of which is urged resiliently into the extended position by a return spring so that it is received in at least one locking notch (152) formed in the rotor (24, 118, 120) when the latter is in the inoperative angular position and **in that** it is can be returned electromagnetically to the retracted position so as to release the manual control element (24, 26, 38) in rotation.

10. Anti-theft device according to the preceding claim, **characterised in that** the locking notch (152) is formed in a rear annular face (120) of the rotor (24, 118) of the manual control element (24, 26, 38).

11. Anti-theft device for a motor vehicle according to the preceding claim,
**characterised in that** the electromagnetic locking element (30) and the trigger switch (32) belong to a sub-assembly (28, 62) forming a sub-assembly inserted into the housing (52, 22).

12. Anti-theft device according to the preceding claim, **characterised in that** the inserted sub-assembly (28) comprises a printed circuit board (62) which carries the said switch (32) and the electromagnetic locking element (30).

13. Anti-theft device according to the preceding claim, **characterised in that** the printed circuit board (62) is in the form of a transversely extending flat ring.

14. Anti-theft device according to claim 12, **characterised in that** the printed circuit board (62) extends in an axial direction.

15. Anti-theft device according to any one of the preceding claims, **characterised in that** the rear axial end of the control rod (26) is connected in axial translation and in rotation with an operating button (38).

## Patentansprüche

1. Diebstahlsicherung für Kraftfahrzeuge, vom Typ mit einem Diebstahlsicherungsmechanismus (20), der ein Gehäuse (52, 54, 56) enthält, in dem ein manuelles Steuerglied (24, 26, 38) zum Starten des Fahrzeugmotors und zum Verriegeln der Lenksäule des Fahrzeugs vorgesehen ist, welches Glied
- zwischen einer hinteren, ausgezogenen Stellung zum Verriegeln der Lenksäule und einer vorderen, eingedrückten Stellung zum Entriegeln der Lenksäule axial verstellbar gelagert ist,
- zwischen mindestens einer Ruhewinkelstellung und einer Gebrauchswinkelstellung drehbar gelagert ist, in welcher es nicht axial nach hinten ausgezogen werden kann,
- mit einem drehbaren nockenartigen Ausfahrglied (132) drehfest verbunden ist, das mit einem Riegel (36, 222) zusammenwirken kann, um die Verlagerungen desselben zu steuern, der im Gehäuse (52, 56) in einer zur Drehachse (A) des manuellen Steuerglieds (24, 25, 38) insgesamt radial verlaufenden Richtung (B) zwischen einer radial nach außen ausgefahrenen Diebstahlsicherungsstellung, in die er elastisch beaufschlagt wird (238) und in der er aus einer Öffnung (58) des Gehäuses (56) herausragt, um ein Glied der Lenksäule drehfest zu arretieren, wenn das manuelle Steuerglied (24, 26, 38) sich in Ruhewinkelstellung und in der hinteren, ausgezogenen Verriegelungsstellung befindet, und einer ins Innere des Gehäuses eingeklappten Einfahrstellung gleitbeweglich gelagert ist, wenn das manuelle Steuerglied (24, 26, 38) sich in der vorderen eingedrückten Stellung befindet,
und vom Typ, bei dem der Riegel (36, 222) radial in der eingeklappten Einfahrstellung durch ein Glied (254) zum Halten des Riegels (36, 222) gehalten wird, das im Gehäuse (52, 54) parallel zur Verlagerungs- und Drehachse des manuellen Steuerglieds (24, 26, 38) zwischen einer zurückgewichenen bzw. eingerückten Stellung und einer aktiven Riegelhaltestellung gleitbeweglich gelagert ist, in die er elastisch beaufschlagt wird (262) und in der ein am freien, vorderen Ende des Riegelhalteglieds (254) gebildeter Haltefinger (252) in einer komplementären Aussparung (250) des Riegels aufgenommen ist,
**dadurch gekennzeichnet, dass** die Verlagerungen des Riegelhalteglieds (254) in seine axial zurückgewichene, hintere Stellung entgegen seiner Rückstellfeder (262) durch die axiale Verlagerung des manuellen Steuerglieds (26, 174, 175) nach hinten bis zu seiner hinteren, ausgezogenen Verriegelungsstellung gesteuert werden, und dass die Diebstahlsicherung elastisch verformbare Mittel (170) enthält, um das manuelle Steuerglied (26) in seiner hinteren, ausgezogenen Verriegelungsstellung zu indexieren und es in dieser Stellung entgegen der Rückstellkraft zu halten, die von seiner Rückstellfeder (262) auf das Riegelhalteglied (254) ausgeübt wird.

2. Diebstahlsicherung nach Anspruch 1, **dadurch gekennzeichnet, dass** das manuelle Steuerglied (26) einen radialen Kragen (174) enthält, dessen ringförmige Hinterseite (175) mit einer Lasche (264) zum Steuern des Riegelhalteglieds (254) zusammenwirkt, die sich dieser ringförmigen Seite (175) gegenüberliegend radial nach innen erstreckt.

3. Diebstahlsicherung nach dem vorangehenden Anspruch, **dadurch gekennzeichnet, dass** das manuelle Steuerglied (26) eine Lasche (196) zum axialen Halt des manuellen Steuerglieds gegenüber dem Statorgehäuse (52, 22) enthält, die sich ausgehend vom Umfangsrand des genannten Kragens (174) radial nach außen erstreckt und axial gleitbeweglich in einer komplementären Nut (198) des Gehäuses (52, 22) aufgenommen ist, um axiale Verlagerungen des manuellen Steuerglieds (26) zwischen seinen beiden axialen Stellungen, nämlich der hinteren ausgezogenen Verriegelungsstellung und der vorderen eingedrückten Entriegelungsstellung, zu ermöglichen.

4. Diebstahlsicherung nach einem der vorangehenden Ansprüche, **dadurch gekennzeichnet, dass** sie enthält:
- ein insbesondere elektromagnetisches Antriebsglied (30) zur Dreharretierung des Steuerglieds (24, 26, 38) gegenüber dem Gehäuse (52, 22), dessen Freigabe dann gesteuert wird, wenn ein codiertes Diebstahlsicherungssignal von einer Identifikationseinrichtung an eine elektronische Schaltung zum Steuern des Arretierglieds abgegeben wird,
- und einen Schalter (32, 70) zum Auslösen einer Abfrage- und Identifikationsphase, der vom Gehäuse (52, 22, 62) abgestützt und vom manuellen Steuerglied (26) ausgelöst wird.

5. Diebstahlsicherung nach dem vorangehenden Anspruch, **dadurch gekennzeichnet, dass** das manuelle Steuermittel einen vorderen Rotor (24, 132) enthält, der gegenüber dem Statorgehäuse (52, 22) zwischen zwei Winkelendstellungen drehbar gelagert ist, von denen die eine der genannten Ruhewinkelstellung entspricht, welche die Verlagerungen des Riegels (36, 222) steuert, und der gegenüber dem Statorgehäuse axial festgelegt ist, sowie eine hintere Steuerstange (26), die gegenüber dem Rotor (24), mit dem sie drehfest verbunden ist, zwischen einer hinteren, ausgezogenen Verriegelungsstellung und einer vorderen Entriegelungsendstellung axial gleitbeweglich gelagert ist.

6. Diebstahlsicherung nach dem vorangehenden Anspruch in Kombination mit Anspruch 3, **dadurch gekennzeichnet, dass** der genannte radiale Kragen (174) zum Steuern des Riegelhalteglieds (254) zu einer hinteren Steuerstange (26) gehört.

7. Diebstahlsicherung nach Anspruch 5, **dadurch gekennzeichnet, dass** die genannten elastisch verformbaren Mittel (170) zum axialen Indexieren des manuellen Steuerglieds (26) in seiner hinteren, ausgezogenen Verriegelungsstellung und zum Halten desselben in dieser Stellung mit einem Abschnitt (164, 163, 165) der hinteren Steuerstange (26) zusammenwirken.

8. Diebstahlsicherung nach einem der Ansprüche 5 bis 7, **dadurch gekennzeichnet, dass** das elektromagnetische Glied (30) zur Dreharretierung des Steuerglieds (24, 26, 38) mit dem vorderen Rotor (24, 152) zusammenwirkt, um diesen drehfest zu arretieren.

9. Diebstahlsicherung nach einem der Ansprüche 5 bis 8, **dadurch gekennzeichnet, dass** das elektromagnetische Arretierglied ein Elektromagnet (30) mit axialer Ausrichtung (C) ist, dessen Kern über eine Rückstellfeder elastisch in die Ausfahrstellung so beaufschlagt wird, dass er in zumindest einer im Rotor (24, 118, 120) ausgeführten Arretiersaussparung (152) aufgenommen wird, wenn dieser sich in seiner Ruhewinkelstellung befindet, und dass er elektromagnetisch in die Einfahrstellung zurückgesetzt werden kann, so dass er das manuelle Steuerglied (24, 26, 38) drehbar freigibt.

10. Diebstahlsicherung nach dem vorangehenden Anspruch, **dadurch gekennzeichnet, dass** die Arretieraussparung (152) in einer ringförmigen Vorderseite (120) des Rotors (24, 118) des manuellen Steuerglieds (24, 26, 38) ausgeführt ist.

11. Kraftfahrzeug-Diebstahlsicherung nach dem vorangehenden Anspruch, **dadurch gekennzeichnet, dass** das elektromagnetische Arretierglied (30) und der Auslöseschalter (32) zu einer Untereinheit (28, 62) gehören, die eine in das Gehäuse (52, 22) eingesetzte Untereinheit bildet.

12. Diebstahlsicherung nach dem vorangehenden Anspruch, **dadurch gekennzeichnet, dass** die eingesetzte Untereinheit (28) eine Leiterplatte (62) enthält, die den genannten Schalter (32) und das elektromagnetische Arretierglied (30) abstützt.

13. Diebstahlsicherung nach dem vorangehenden Anspruch, **dadurch gekennzeichnet, dass** die Leiterplatte (62) in Form einer ringförmigen Platte mit quer verlaufender Ausrichtung ausgeführt ist.

14. Diebstahlsicherung nach Anspruch 12, **dadurch gekennzeichnet, dass** die Leiterplatte (62) mit axialer Ausrichtung ausgeführt ist.

15. Diebstahlsicherung nach einem der vorangehenden Ansprüche, **dadurch gekennzeichnet, dass** das axial hintere Ende der Steuerstange (26) axial verschiebbar und drehbar mit einem Bedienknopf (38) verbunden ist.
